# EUROPEAN PATENT APPLICATION

(11) **EP 4 187 646 A1**
(43) Date of publication of application: **31.05.2023**
(21) Application number: 21846090.5
(22) Date of filing: 09.07.2021
(51) Int. Cl.: H01M 4/36, H01M 4/587, H01M 4/38, H01M 4/62, C01B 32/21, C01B 32/05, C01B 33/02, H01M 10/052

(54) **METHOD FOR PRODUCING NEGATIVE ELECTRODE ACTIVE MATERIAL, AND SECONDARY BATTERY INCLUDING NEGATIVE ELECTRODE ACTIVE MATERIAL**

(30) Priority: 24.07.2020 KR 20200092016
(71) Applicant: Fic Advanced Materials, Inc., Pohang-si, Gyeongsangbuk-do 37892 (KR)
(72) Inventor: YOO, Sung Woon, Seoul 06075 (KR); LEE, Hyun Ho, Hwaseong-si, Gyeonggi-do 18499 (KR); LEE, Byung Gwan, Hwaseong-si, Gyeonggi-do 18456 (KR)
(74) Representative: Lermer, Christoph
(86) International application number: PCT/KR2021/008769
(87) International publication number: WO 2022/019543

(57) **Abstract**

The present invention relates to a method for preparing an anode active material and a secondary battery including the anode active material. The anode active material may be prepared by including the steps of: preparing intermediate-stage spheroidized particles by pulverizing and spheroidizing flaky graphite particles; preparing coated particles by mixing the intermediate-stage spheroidized particles with composite particles and performing a mechanochemical reaction thereon to coat the surface of the intermediate-stage spheroidized particles with the composite particles; and spheroidizing the coated particles and coating the surface thereof with amorphous carbon to prepare spherical graphite.

## Description

### [Technical Field]

The present invention relates to a method for preparing an anode active material and a secondary battery including the anode active material, and more specifically, to an anode active material including spherical graphite particles coated with amorphous carbon prepared by a mechanochemical reaction, a method for preparing the anode active material and a secondary battery including the anode active material.

### [Background Art]

Crystalline graphite, which is used as an anode active material for a lithium secondary battery, is obtained and used by preparing flaky graphite in spherical graphite particles through a granulating process. Since these spherical graphite particles are granulated without a gap between flaky graphite fragments on the surface of the particles, there is a limitation in contact with an electrolyte. Due to this, when applying these particles to the anode active material, there is a problem in that charge/discharge characteristics of the battery are reduced. This is because expansion and contraction of spherical graphite particles cannot be effectively controlled during charging and discharging processes in which lithium ions are repeatedly intercalated and deintercalated. Eventually, structures of the granulated particles become unstable as a bonding force of the flaky graphite fragments is decreased, and a reaction with the electrolyte penetrating into the particles is performed in an irreversible reaction due to repeated charging and discharging, such that an excessive solid-electrolyte interphase film is formed and a swelling phenomenon occurs.

In order to solve these problems, research and development to improve properties of spherical graphite particles have been conducted.

For example, in Korean Patent Registration Nos. 10-1965773 and 10-1919470, by applying a technique in which spheroidized natural graphite particles are subjected to ultrasonic treatment to expand gaps between the flaky natural graphite fragment particles present on the surface and inside of the spheroidized natural graphite particles, and defects of a concave-convex structure are formed on the surface of the flaky natural graphite fragment particles present on the surface and inside of the spheroidized natural graphite particles, high-rate charge/discharge characteristics and cycle life-span characteristics of the secondary battery are improved.

In addition, in Korean Patent Registration Publication No. 10-1986680, by isotropically pressing granulated particles including crystalline natural graphite powder particles and soft carbon precursor, properties of the prepared particles are improved.

When applying the conventional preparation method known in the prior art, it is possible to form gaps between the spherical particles, such that the properties of the particles as an anode active material may be improved. However, it is not possible to completely solve the problem in that the process is complicated and the bonding force of the flaky graphite fragments is reduced, such that improvement thereof is required.

### [Summary of Invention]

### [Problems to be Solved by Invention]

In consideration of the above-mentioned circumstances, it is an object of the present invention to provide a method for preparing an anode active material capable of improving high-rate charge/discharge characteristics and cycle life-span characteristics of the secondary battery by preparing spherical graphite particles through a mechanochemical reaction thus to form gaps between flaky graphite particles while improving stability thereof.

Further, another object of the present invention is to provide a secondary battery with improved charge/discharge characteristics by using the anode active material as an anode material.

### [Means for Solving Problems]

To achieve the above objects, according to an aspect of the present invention, there is provided a method for preparing an anode active material including the steps of: preparing intermediate-stage spheroidized particles by pulverizing and spheroidizing flaky graphite particles; preparing coated particles by mixing the intermediate-stage spheroidized particles with composite particles and performing a mechanochemical reaction thereon to coat the surface of the intermediate-stage spheroidized particles with the composite particles; and spheroidizing the coated particles and coating the surface thereof with amorphous carbon to prepare spherical graphite.

At this time, the composite particles may include any one of silicon (Si), tin (Sn), antimony (Sb), aluminum (Al), germanium (Ge), zinc (Zn), lead (Pb), or a mixture of two or more thereof, or an oxide thereof, or a mixture of two or more of the oxides.

In addition, according to another aspect of the present invention, there is provided a secondary battery including: an anode including the anode active material prepared by the above preparation method; a cathode disposed to face the anode and including a cathode active material; a separator provided between the cathode and the anode; and an electrolyte provided to impregnate the separator.

### [Advantageous effects]

According to the method for preparing an anode active material of the present invention, there are effects as follows. First, it is possible to improve high-rate charge/discharge characteristics and cycle life-span characteristics of the secondary battery by preparing spherical graphite particles through a mechanochemical reaction thus to form gaps between flaky graphite particles while improving stability thereof.

Further, it is possible to improve charge/discharge characteristics of the secondary battery by using the anode active material as an anode material.

### [Brief Description of Drawings]

FIG. 1 is a view showing a concept of a process for preparing an anode active material according to the present invention.
FIG. 2 is graphs showing test evaluation results for capacity (a) and cycle characteristics (b) of secondary batteries to which graphite including silicon deposited on a surface thereof by a conventional method and graphite including silicon bonded thereto by a mechanochemical reaction of the present invention are applied.
FIG. 3 is graphs showing test evaluation results for capacity (a) and cycle characteristics (b) of secondary batteries to which artificial graphite and spherical graphite of the present invention are applied.

### [Mode for Carrying out Invention]

Hereinafter, the present invention will be described in detail. Prior to this, terms or words used in the specification and claims should not be construed as limited to a conventional or lexical meaning. Instead, based on a principle that an inventor may desirably define the concept of terms or words to describe his/her invention by means of the most preferable method, the terms or words should be construed as the meanings and concepts in compliance with technical ideas of the present invention.

The anode active material according to the present invention uses spherical graphite particles as a main material, and is technically characterized in that the characteristics of the anode active material are improved by optimizing a process for preparing spherical graphite particles.

To this end, the anode active material according to the present invention may be prepared by a method including the steps of: preparing intermediate-stage spheroidized particles by pulverizing and spheroidizing flaky graphite particles; preparing coated particles by mixing the intermediate-stage spheroidized particles with composite particles and performing a mechanochemical reaction thereon to coat the surface of the intermediate-stage spheroidized particles with the composite particles; and spheroidizing the coated particles and coating the surface thereof with amorphous carbon to prepare spherical graphite.

In general, when preparing spherical graphite by a dry preparation process, flaky graphite particles may be spheroidized by pulverizing through high-speed milling. In this case, since the spheroidization is performed as the graphite particles collide during the high-speed milling process, the yield thereof is only about 40%, and there is a problem in that all graphite byproduct particles that have not been spheroidized should be discarded. For example, when pulverizing and spheroidizing flaky graphite particles with a size of 30 to 200 um by high-speed milling, spherical graphite of 3 to 20 um are formed. Then, an anode active material is prepared by performing a surface treatment to remove a rough surface by milling the spherical graphite at a low speed, and coating the surface thereof with amorphous carbon. In this regard, there are problems in that the yield of the spherical graphite particles prepared by the above-described process is too low, and gaps between the obtained spherical graphite particles are insufficient, thereby resulting in a decrease in the charge/discharge characteristics of the battery.

In the present invention, the problems entailed in the conventional preparation method are solved by preparing the spherical graphite particles using a mechanochemical reaction. In the mechanochemical reaction, compression, shear and impact between particles can occur at once, such that chemical bonds between the particles are created by a mechanical energy.

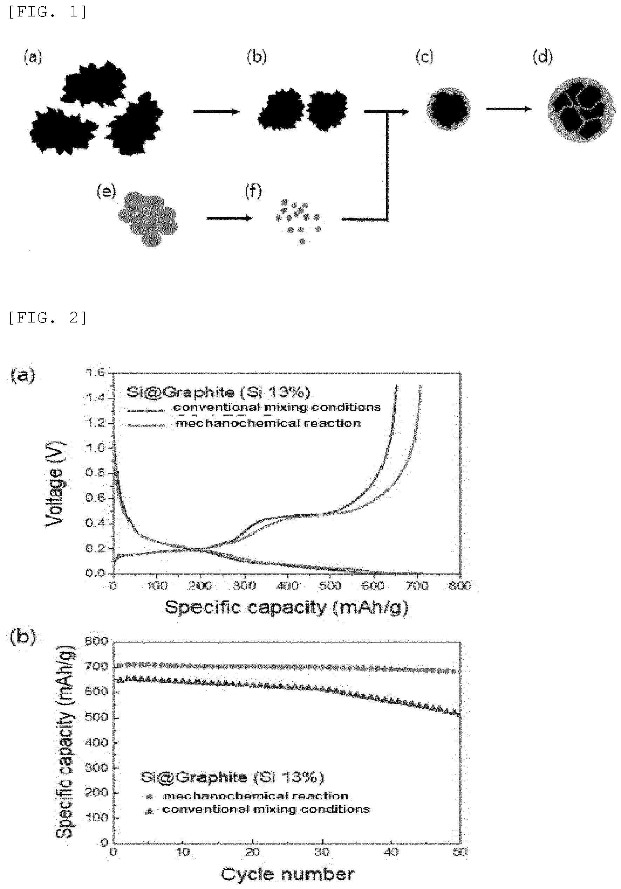

Herein, a method for preparing an anode active material according to the present invention will be described with reference to FIG. 1. The preparation method may include the steps of: preparing intermediate-stage spheroidized particles by pulverizing and spheroidizing flaky graphite particles; preparing coated particles by mixing the intermediate-stage spheroidized particles with composite particles and performing a mechanochemical reaction thereon to coat the surface of the intermediate-stage spheroidized particles with the composite particles; and spheroidizing the coated particles and coating the surface thereof with amorphous carbon to prepare spherical graphite.

The flaky graphite particles have a particle size of 30 to 200 um as shown in FIG. 1(a), and natural graphite, kish graphite, or artificial graphite may be used. The flaky graphite particles are spheroidized when pulverizing them using a ball mill. In this case, as shown in FIG. 1(b), the size of the particles is decreased and the complete spherical shape is not formed, but the intermediate-stage spheroidized particles forming an intermediate stage thereof are formed.

When the composite particles are mixed with the intermediate-stage spheroidized particles and the mixture is subjected to the mechanochemical reaction, as in FIG. 1(c), the composite particles are bonded to the surface of the intermediate-stage spheroidized particles to form a coating layer.

The composite particle may include any one of silicon (Si), tin (Sn), antimony (Sb), aluminum (Al), germanium (Ge), zinc (Zn), and lead (Pb), or a mixture of two or more of the above components. In addition, the composite particles may include any one selected from an oxide of the above components, or a mixture of two or more of the oxides.

Generally, silicon particles are used as the composite particles. In the prior arts, during processing with the composite particles, composite of graphite particles and silicon particles are performed by a wet process. In this case, there are problems in that the yield is low, the stability of the prepared particles is insufficient, and the charge/discharge effects are also insufficient. In the present invention, these problems are solved by applying a mechanochemical reaction which is a dry preparation method.

The composite particles are used for the mechanochemical reaction by pulverizing particles having a size of several µm using a ball mill or jet mill as shown in 1(e), and then making them into particles having a size of 10 to 200 nm as in shown in FIG. 1(f) . Since the composite particles have a significantly smaller size than the intermediate-stage spheroidized particles, they react on the surface of the intermediate-stage spheroidized particles through the mechanochemical reaction to form a bond therewith, and as a result, a surface coating layer is formed.

MSR Advances, 4, 155-162 (2019) discloses experimental results for preparing a composite by performing a mechanochemical reaction on the graphite particles and iron oxide nanoparticles. In this case, this document describes results of carbon atoms being incorporated into a crystal structure of iron oxide nanoparticles or forming a new crystal structure depending on mechanochemical reaction conditions. The above results suggest that a crystal structure unsuitable for the anode active material may be generated depending on the mechanochemical reaction conditions. Therefore, in the present invention, the mechanochemical reaction conditions are optimized and applied to prepare the composite by reflecting the results of the prior studies.

In addition, it was shown that, prior to performing the mechanochemical reaction, when immersing the intermediate stage-spheroidized particles in hexane for 10 to 30 seconds followed by drying the same, and then performing a mechanochemical reaction by mixing the intermediate stage-spheroidized particles whose surface is subjected to surface treatment with hexane and the composite particles, the generation of undesirable crystal structures was inhibited. This is presumed to be because when carbon atoms penetrate into the structure of the composite particles by the mechanochemical reaction, carbon atoms are provided from hexane molecules adsorbed on the surface, such that the graphite particles themselves do not undergo modification.

When coating the surface of the intermediate-stage spheroidized particles with the composite particles to prepare the coated particles, the coated particles are spheroidized and the surface thereof is coated with amorphous carbon, such that spherical graphite coated with amorphous carbon may be prepared, as shown in FIG 1 (d).

Therefore, in the preparation method of the present invention, mesophase particles (the intermediate stage-spheroidized particles) having a size of 3 to 10 um are formed before the finally produced spherical graphite is spheroidized into particles having a size of 5 to 30 um. After adding the pulverized composite particles having a size of 10 to 200 nm to the mesophase particles and coating the surface of the mesophase particles with the composite particles by the mechanochemical reaction under a dry condition, a spheroidizing operation is performed.

The spherical graphite particles prepared as described above may be applied as an anode active material. The anode active material may be included in an anode to form a secondary battery. The secondary battery may include the anode, a cathode disposed to face the anode and including a cathode active material, a separator provided between the cathode and the anode, and an electrolyte provided to impregnate the separator.

In order to confirm effects obtained when applying the anode active material of the present invention to a secondary battery, a cathode containing LNMO (LiNi_{0.5}Mn_{1.5}O₄) and an anode to which spherical graphite (Si content of 13%) according to the present invention is applied as an anode active material were prepared, then a full cell was prepared using the cathode and anode, followed by measuring the discharge capacity retention characteristics according to the number of charging/discharging times (cycles). In the full cell, Super-P Li and PVDF binder were applied as a conductive agent, and a separation membrane of 15 um PE separation membrane of which both sides are coated with ceramic of 2 to 3 um was applied as a separation membrane (separator). As the electrolyte, 1M LiPF6 + EC:DEC:DMC (vol% 1:1:1) was used. In addition, for comparison, a test was conducted using conventional spherical graphite deposited with silicon prepared by a dry preparation process as an anode active material.

As a result, as shown in FIG. 2(a), it could be found that when the spherical graphite according to the present invention was applied as the anode active material, higher charge/discharge efficiency was exhibited than the case of using the spherical graphite according to the conventional preparation method. In addition, also from the evaluation results of the cycle characteristics, it could be confirmed that when the spherical graphite according to the present invention was applied as the anode active material, stable capacity retention rate characteristics were exhibited at the time of repeated charging and discharging under the same condition.

It is considered that these characteristics of the secondary battery are caused by improvement in the characteristics of the anode active material, since a stable composite with graphite can be formed when preparing spherical graphite by applying a mechanochemical reaction in the present invention.

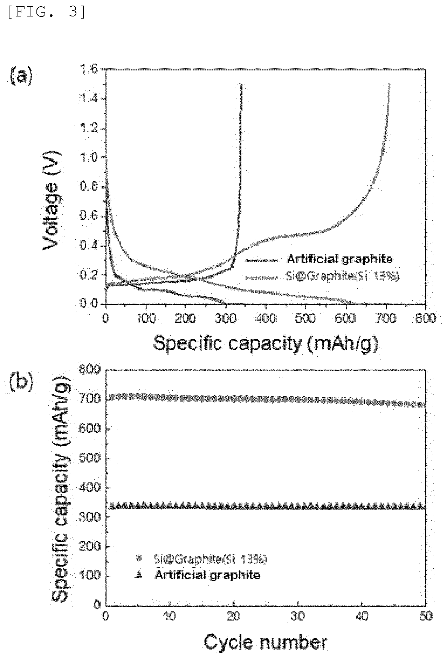

In addition, charge/discharge characteristics and capacity retention rates of the full cell using artificial graphite as the anode active material and the full cell using the spherical graphite of the present invention as the anode active material were evaluated. As a result of the evaluation, as shown in FIG. 3, it was confirmed that improved characteristics of the secondary battery could be obtained when the spherical graphite according to the present invention was applied.

Therefore, it was confirmed that a high-quality secondary battery could be prepared by achieving improvement in electrical conductivity and improvement in output characteristics through the improved electrical conductivity when the spherical graphite according to the present invention was applied as the anode active material.

While the present invention has been described with reference to the preferred embodiments as described above, it is not limited to the above-described embodiments, and various modifications and variations may be made by persons skilled in the art to which the present invention pertains without departing from spirit of the present invention. Such modifications and variations are duly included within the scope of the present invention and the appended claims.

## Claims

1. A method for preparing an anode active material comprising the steps of:
preparing intermediate-stage spheroidized particles by pulverizing and spheroidizing flaky graphite particles;
preparing coated particles by mixing the intermediate-stage spheroidized particles with composite particles and
performing a mechanochemical reaction thereon to coat the surface of the intermediate-stage spheroidized particles with the composite particles; and
spheroidizing the coated particles and coating the surface thereof with amorphous carbon to prepare spherical graphite.

2. The method for preparing an anode active material according to claim 1,
wherein the composite particles include any one of silicon (Si), tin (Sn), antimony (Sb), aluminum (Al), germanium (Ge), zinc (Zn), lead (Pb), or a mixture of two or more thereof, or an oxide of the above components, or a mixture of two or more of the oxides.

3. A secondary battery comprising: an anode comprising the anode active material prepared by the preparation method of claim 1; a cathode disposed to face the anode and comprising a cathode active material; a separator provided between the cathode and the anode; and an electrolyte provided to impregnate the separator.
